# EUROPEAN PATENT APPLICATION

(11) **EP 4 354 611 A1**
(43) Date of publication of application: **17.04.2024**
(21) Application number: 22214483.4
(22) Date of filing: 19.12.2022
(51) Int. Cl.: H01M 50/204, H01M 10/613, H01M 10/6554

(54) **BATTERY MODULE AND BATTERY PACK**

(30) Priority: 10.10.2022 CN 202222662929 U
(71) Applicant: CALB Co., Ltd., Changzhou City, Jiangsu Province (CN)
(72) Inventor: Zhao, Dong, Changzhou City, Jiangsu Province (CN)
(74) Representative: Becker, Eberhard

(57) **Abstract**

The disclosure discloses a battery module and a battery pack. The battery module includes a single-cell battery module (2), having a plurality of single-cell batteries disposed in a stack; two end plates (12), disposed opposite to each other, where the two end plates (12) are respectively disposed at two ends of the single-cell battery module (2) in a stacking direction of the single-cell batteries, and non-penetrating mounting holes (122) are disposed on bottoms of the two end plates (12); a supporting plate (3), disposed at the bottoms of the two end plates (12), where the supporting plate (3) and the end plate (12) are connected through the non-penetrating mounting holes (122).

## Description

### BACKGROUND

### Technical Field

The disclosure relates to the technical field of batteries, and particularly, to a battery module and a battery pack.

### Description of Related Art

At present, the connection structure between a battery module and a battery box or a heat exchange plate includes a through hole disposed to penetrate an end plate disposed in the height direction of the end plate, and the bolt being locked with the nut after passing through the through hole, so as to connect and fix the heat exchange plate or the battery box with the battery module.

However, the said structure has the following defects: a thermal runaway expansion of a single-cell battery may deform the end plate, resulting in the deformation of the through hole. When disassembly is required, the bolt cannot be taken out from the through hole, affecting the separation of the battery box or the heat exchange plate from the battery module.

### SUMMARY

To overcome at least one of the defects in the conventional technology, the disclosure provides a battery module and a battery pack to solve the problem of disassembling the battery module.

The technical solution adopted by the disclosure for solving its problems is:
a battery module, including:
a single-cell battery module, including a plurality of single-cell batteries disposed in a stack;
two end plates disposed opposite to each other, wherein the two end plates are respectively disposed at two ends of the single-cell battery module in a stacking direction of the single-cell batteries, and non-penetrating mounting holes are disposed on the bottoms of the two end plates; and
a supporting plate disposed at the bottoms of the two end plates, wherein the supporting plate and the two end plates are connected through the non-penetrating mounting holes.

Since the mounting hole is a non-penetrating structure, when the end plate is connected to the supporting plate through a connecting piece, the connecting piece is short and does not penetrate the end plate. Even if the end plate deforms due to the expansion of the battery core, this has little effect on the connecting piece without easily subjecting the connecting piece to deformation, so that the supporting plate and the end plate can be separated smoothly during disassembly.

On the other hand, the disclosure also provides a battery pack, which includes the battery module.

### BRIEF DESCRIPTION OF THE DRAWING

FIG. 1 is a bottom view of an end plate in an embodiment.
FIG. 2 is an exploded view illustrating a heat exchange plate and an end plate connected by bolts in an embodiment.
FIG. 3 is a bottom view illustrating a heat exchange plate and an end plate connected by bolts in an embodiment.
FIG. 4 is a schematic structural view of a battery module in an embodiment.
FIG. 5 is an exploded view of FIG. 4.

### DESCRIPTION OF THE EMBODIMENTS

For better understanding and implementation, the technical solutions in the embodiments of the disclosure will be clearly and completely described below with reference to the accompanying drawings in the embodiments of the disclosure.

In the description of the disclosure, it should be noted that the terms "upper", "lower", "front", "rear", "left", "right", "vertical", "horizontal", "top", "bottom", "inside", "outside", etc. indicate the orientation or positional relationship based on the orientation or positional relationship shown in the accompanying drawings, they are only for the convenience of describing the disclosure and simplifying the description rather than indicating or implying that a device or element must have a specific orientation, be constructed and operated in a specific orientation, and therefore should not be interpreted as a limitation of the disclosure.

Unless otherwise defined, all technical and scientific terms used herein have the same meaning as commonly understood by one of ordinary skill in the technical field to which the disclosure belongs. The terms used in the specification of the disclosure herein are only for the purpose of describing specific embodiments and are not intended to limit the disclosure.

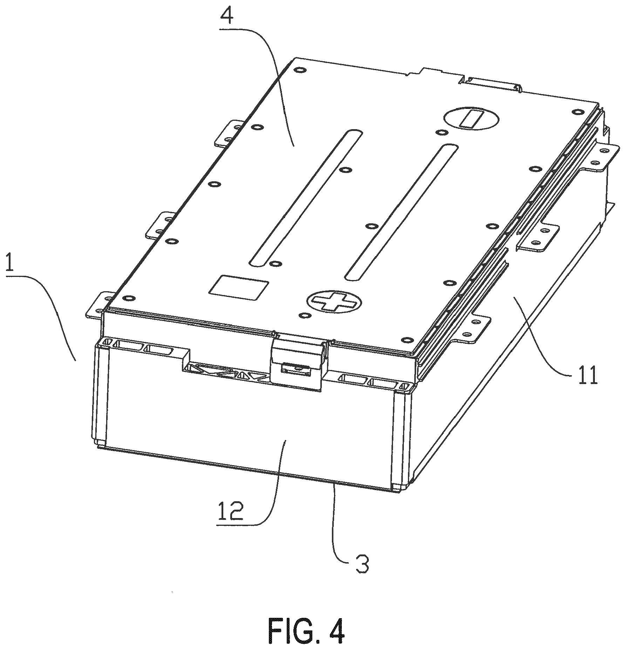

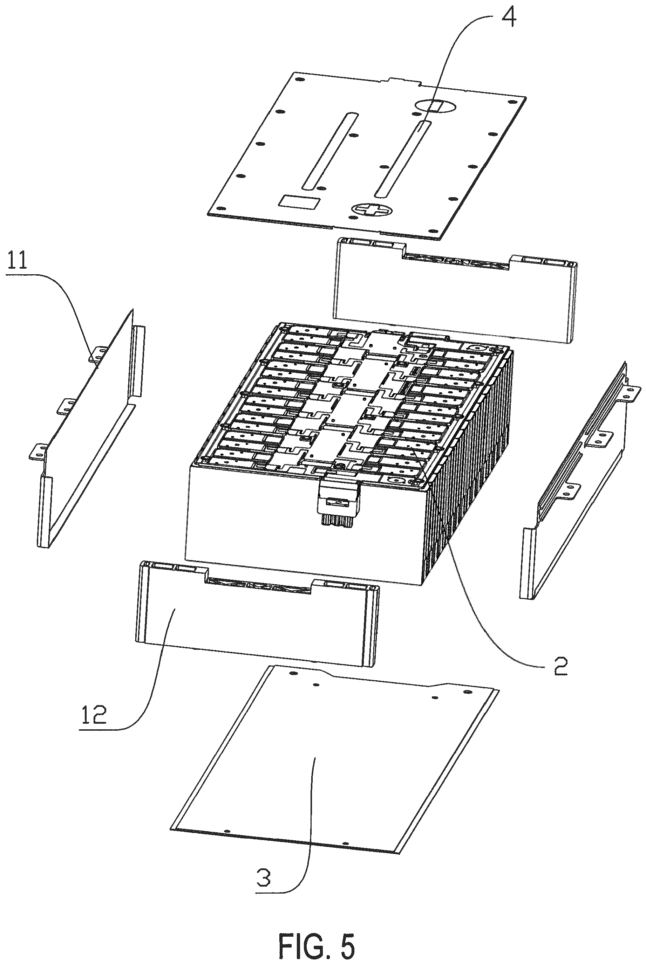

Referring to FIG. 4 and FIG. 5, the embodiment discloses a battery module. The battery module includes a case 1, a single-cell battery module 2, a heat exchange plate 3, and a cover plate 4. The single-cell battery module 2 is disposed in an accommodating cavity inside the case 1, and includes a plurality of single-cell batteries disposed in a stack, and the two adjacent single-cell batteries are connected at the surface with the largest surface area. The cover plate 4 is disposed on the top of the case 1 and covers the single-cell battery module 2. The heat exchange plate 3 is disposed at the bottom of the case 1 and fixedly connected to the single-cell battery module 2. The heat exchange plate 3 may be selected as a liquid cooling plate or a heating plate, which is selected according to the environment in which the battery module is used. If the battery module is used in an ultra-low temperature environment, it needs to be heated to improve the performance of the battery module. The heat exchange plate 3 is selected as a heating plate. On the contrary, the heat exchange plate 3 is selected as a liquid cooling plate.

According to the conventional design of a battery module, the case 1 in the embodiment has a cuboid structure. In actual production practice, the shape of the case 1 may be adjusted according to requirements. The case 1 includes two side plates 11 and two end plates 12. Referring to the directions shown in FIG. 4 and FIG. 5, the two side plates 11 are disposed symmetrically from left to right, and the two end plates 12 are disposed symmetrically from front to rear. In addition, the front-rear direction is the stacking direction of a plurality of single-cell batteries. In the horizontal direction, each of two ends of one side plate 11 in the length direction is connected to one end plate 12, and each of two ends of one end plate 12 in the length direction is also connected to one side plate 11, thereby a cuboid structure of the case 1 is formed. The heat exchange plate 3 is disposed at the bottom of the case 1 and is fixedly connected to the end plates 12.

The end plate 12 is disposed close to the surface with the largest surface area of the single-cell battery in the single-cell battery module 2, so the thermal runaway expansion of the single-cell battery may squeeze the end plate 12, resulting in the deformation of the end plate 12. Conventionally, long screws are used to penetrate the end plate 12 and the heat exchange plate 3, and nuts are used for locking. The deformation of the end plate 12 may lead to the deformation of the long screws. When the battery module needs to be disassembled, the long screws cannot be removed smoothly.

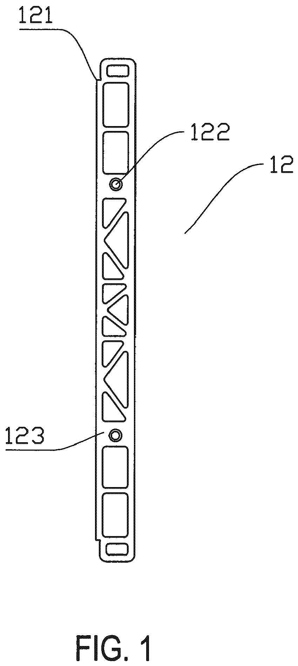

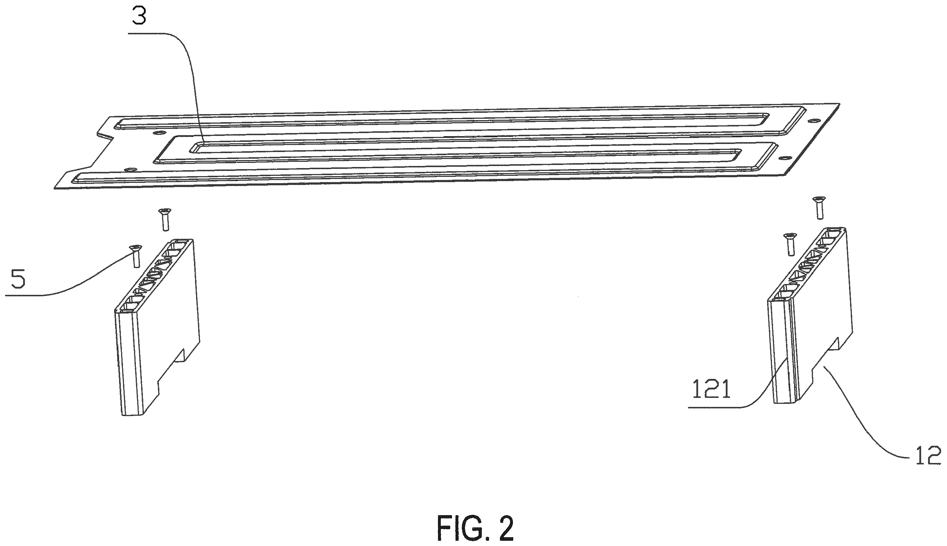

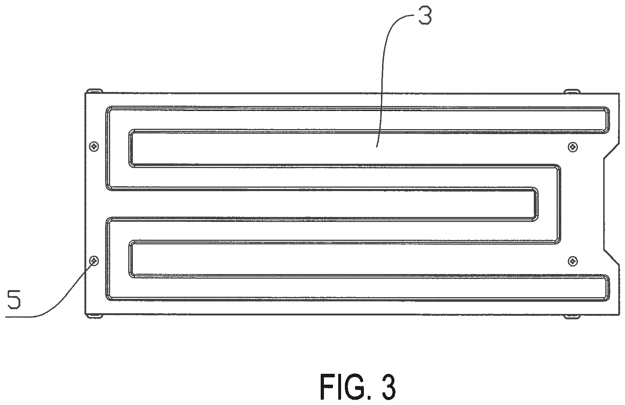

Accordingly, referring to FIG. 1-FIG. 3, the embodiment discloses an end plate 12 including an end plate body 121, a mounting hole 122 is disposed on the end plate body 121, and the mounting hole 122 is a blind hole extending upward from the bottom of the end plate body 121 without penetrating the end plate body 121. When the end plate 12 and the heat exchange plate 3 are fixedly connected, the connecting piece penetrates the heat exchange plate 3 and extends into the mounting hole 122 of the end plate body 121, thereby fixing the heat exchange plate 3 and the end plate 12. Since the mounting hole 122 is a non-penetrating structure, when the end plate 12 and the heat exchange plate 3 are connected through the connecting piece, the connecting piece is short and does not penetrate the end plate 12. Even if the end plate 12 is deformed due to the expansion of the single-cell battery, this has little effect on the connecting piece without easily subjecting the connecting piece to the deformation, so that the heat exchange plate 3 and the end plate 12 can be separated smoothly during disassembly.

Preferably, the height of the mounting hole 122 is less than half of the height of the single-cell battery. Since the position of the thermal runaway expansion of the single-cell battery is mainly in the middle area, the deformation of the corresponding end plate 12 also occurs at this height, and the height of the mounting hole 122 is less than the height of this position to prevent the deformation effect, thereby ensuring the structure of the mounting hole 122 and the connecting piece is not easy to be damaged, which further improves the separation efficiency of the heat exchange plate 3 and the end plate 12.

Referring to FIG. 1, a plurality of reinforcing ribs 123 are disposed at intervals on the end plate body 121. The reinforcing ribs 123 are disposed along the height direction of the end plate body 121 and penetrate the end plate body 121. The mounting holes 122 are disposed in the reinforcing ribs 123. The reinforcing ribs 123 have high strength and are not easily damaged when the mounting holes 122 are disposed.

Further, threads are configured in the inner wall of the mounting hole 122, and the connecting piece may be selected as a bolt 5. The bolt 5 passes through the heat exchange plate 3 and extends into the mounting hole 122 with internal threads to fix the heat exchange plate 3 and the end plate 12.

Preferably, the bolt 5 is a countersunk head bolt, which ensures the flatness of the bottom surface of the battery module.

In addition, the embodiment also discloses a battery pack, which includes a battery box and the battery module. The battery module is disposed in the battery box and fixedly connected to the bottom plate of the battery box. The bolts 5 pass through the bottom plate of the battery box and the heat exchange plate 3 in sequence and extend into the mounting holes 122 with internal threads to fix the battery module in the battery box.

## Claims

1. A battery module, comprising:
a single-cell battery module (2), comprising a plurality of single-cell batteries disposed in a stack;
two end plates (12), disposed opposite to each other, wherein the two end plates (12) are respectively disposed at two ends of the single-cell battery module (2) in a stacking direction of the single-cell batteries, and non-penetrating mounting holes (122) are disposed on bottoms of the two end plates (12); and
a supporting plate (3), disposed at the bottoms of the two end plates (12), wherein the supporting plate (3) and the two end plates (12) are connected through the non-penetrating mounting holes (122).

2. The battery module according to claim 1, wherein each of the two end plates (12) comprises an end plate body (121), and the non-penetrating mounting holes (122) extends vertically upward from a bottom of the end plate body (121) without penetrating the end plate body (121).

3. The battery module according to claim 2, wherein a height of each of the non-penetrating mounting holes (122) is less than half of a height of the end plate body (121).

4. The battery module according to claim 2 or claim 3, wherein threads are disposed on an inner wall of each of the non-penetrating mounting holes (122), the supporting plate (3) and the two end plates (12) are fixedly connected by bolts (5), and the bolts (5) pass through the supporting plate (3) and extend into the non-penetrating mounting holes (122) each configured with threads on the inner wall.

5. The battery module according to claim 4, wherein the bolts (5) are countersunk head bolts.

6. The battery module according to claim 4, wherein reinforcing ribs (123) are disposed in the end plate body (121), and the reinforcing ribs (123) are disposed along a height direction of the end plate body (121) and penetrate the end plate body (121).

7. The battery module according to claim 6, wherein the non-penetrating mounting holes (122) are disposed in the reinforcing ribs (123).

8. The battery module according to claim 7, wherein the battery module further comprises two side plates (11) disposed opposite to each other, and in a horizontal direction, the two side plates (11) and the two end plates (12) are connected alternately to form a case (1), and the single-cell battery module (2) is disposed in the case (1).

9. The battery module according to claim 8, wherein the supporting plate (3) is a heat exchange plate, the battery module further comprises a cover plate (4), the heat exchange plate is disposed at a bottom of the case (1) and fixedly connected to the single-cell battery module (2), and the cover plate (4) is disposed on a top of the case (1) and covers the single-cell battery module (2).

10. A battery pack, comprising the battery module according to any one of claim 1 to claim 9.

## Amended claims

### Amended claims in accordance with Rule 137(2) EPC.

1. A battery module, comprising:
a single-cell battery module (2), comprising a plurality of single-cell batteries disposed in a stack;
two end plates (12), disposed opposite to each other, wherein the two end plates (12) are respectively disposed at two ends of the single-cell battery module (2) in a stacking direction of the single-cell batteries, and non-penetrating mounting holes (122) are disposed on bottoms of the two end plates (12); and
a supporting plate (3), disposed at the bottoms of the two end plates (12), wherein the supporting plate (3) and the two end plates (12) are connected through the non-penetrating mounting holes (122),
wherein the battery module is **characterized in that**
reinforcing ribs (123) are disposed in an end plate body (121) of each of the two end plates (12), and the reinforcing ribs (123) are disposed along a height direction of the end plate body (121) and penetrate the end plate body (121), and the non-penetrating mounting holes (122) are disposed within the reinforcing ribs (123).

2. The battery module according to claim 1, wherein the non-penetrating mounting holes (122) extends vertically upward from a bottom of the end plate body (121) without penetrating the end plate body (121).

3. The battery module according to claim 2, wherein a height of each of the non-penetrating mounting holes (122) is less than half of a height of the end plate body (121).

4. The battery module according to claim 2 or claim 3, wherein threads are disposed on an inner wall of each of the non-penetrating mounting holes (122), the supporting plate (3) and the two end plates (12) are fixedly connected by bolts (5), and the bolts (5) pass through the supporting plate (3) and extend into the non-penetrating mounting holes (122) each configured with threads on the inner wall.

5. The battery module according to claim 4, wherein the bolts (5) are countersunk head bolts.

6. The battery module according to claim 1, wherein the battery module further comprises two side plates (11) disposed opposite to each other, and in a horizontal direction, the two side plates (11) and the two end plates (12) are connected alternately to form a case (1), and the single-cell battery module (2) is disposed in the case (1).

7. The battery module according to claim 6, wherein the supporting plate (3) is a heat exchange plate, the battery module further comprises a cover plate (4), the heat exchange plate is disposed at a bottom of the case (1) and fixedly connected to the single-cell battery module (2), and the cover plate (4) is disposed on a top of the case (1) and covers the single-cell battery module (2).

8. A battery pack, comprising the battery module according to any one of claim 1 to claim 7.
